# EUROPEAN PATENT SPECIFICATION

(11) **EP 2 123 423 B1**
(45) Date of publication and mention of the grant of the patent: **08.06.2011**
(21) Application number: 08718408.1
(22) Date of filing: 10.01.2008
(51) Int. Cl.: B29C 45/44

(54) **Apparatus and method for releasing plastic parts**
Vorrichtung und Verfahren zum Auswerfen von Kunststoffteilen
Appareil et procédé de démoulage de pièces plastiques

(30) Priority: 10.01.2007 ES 200700085; 22.05.2007 ES 200701396
(43) Date of publication of application: 25.11.2009
(73) Proprietor: Mecanoplastica, S.A., 20305 Irun, Guipuzcoa (ES)
(72) Inventor: SEGUROLA OLARREAGA, Pedro, E-20305 Irun, Guipuzcoa (ES)
(74) Representative: Ungria Lopez, Javier
(86) International application number: PCT/ES2008/000007
(87) International publication number: WO 2008/084128

(56) References cited:
- WO-A1-2006/117068
- FR-A1- 2 762 252
- JP-A- 7 223 244
- JP-A- 7 266 384
- JP-A- 56 010 438
- US-A- 4 502 660
- US-A- 4 832 307
- US-A1- 2002 076 466

## Description

The invention relates to an apparatus which comprises a punch on which a cavity is folded in order to form a mould corresponding to the plastic part, and which includes means for ejecting the plastic part in order to release it from the mould via the frontal part; and which has the aim of improving and facilitating the means for ejecting of the plastic part in such a way that simplifies its functioning and reduces the number of movable parts, which also results in a lower manufacturing cost for the apparatus.

Also forming an object of the invention is a method that simplifies the ejection of the moulded part due to permitting a reduction in the number of movable parts of the apparatus.

The invention is applicable in the manufacture by moulding of any kind of plastic part and more particularly in the manufacture by moulding of automobile parts such as bumpers.

### BACKGROUND OF THE INVENTION

Moulding machines are known in the state of the art consisting of a structure known as a punch, in which a mould segment is included and on which a structure known as a cavity is folded in a manner complementary to the punch, in order to obtain a moulded plastic part. The punch contains some hydraulic ejector cylinders which act on an ejector plate containing a series of rods which produce the displacement of two slidable parts and of ejector rulers so that when the hydraulic cylinders are actuated the sliding of the sliding parts takes place in order to release some negative zones together with the movement of the ejector rulers, and as a consequence the moulded plastic part, permitting it to be ejected. It can also be pointed out that the punch is arranged on some wedges and a base plate supporting the moulding machine.

Consequently, the number of parts used for the moulding and releasing of the plastic part is considerable and complex.

Document WO2006/117068 refer to a plastics injection mould tool, consisting of a front and a rear tool half which, in the closed state, delimit a hollow molding chamber between them, wherein the rear tool half has at least one ejector, which is constituted by its front portion and can be shifted to a limited extent by a linear drive mechanism, and at least one oblique slide, which is guided by means of an oblique guide element.

FR-2762252 refers to an injection mould for large objects, e.g., automobile bumpers or shades. The mould has two or more sections with actuators moving them together relatively, to define the closed injection moulding cavity.JP7223244 discloses a resin molding device including a slantly moving ore block and a directly moving core block, and that allows releasing a resin molded product from the directly moving core block.

JP7266384 discloses an injection mold with a molding member having undercut parts in a lateral direction and longitudinal direction to a vehicle, also provided with a slide core for an undercut clearing to demold one undercut part of the lateral direction to be formed in the molding member, and a block to demold the undercut part of the longitudinal direction.

JP7223244 and JP7266384 define classical Injection molds whereas FR-2762252 and WO2006/117068 being closer to the present invention refer both of them to compact molds wherein the ejection is carried out in a frontal straight way instead of through inclined cylinders.

The need to be more competitive and the globalisation of the market compel more economical and simpler solutions to be sought in order to improve existing apparatus.

### DESCRIPTION OF THE INVENTION

In order to overcome the drawbacks and achieve the objectives stated above, the invention has developed a new apparatus for release by forward ejection which, as with conventional ones, comprises a punch on which a cavity is folded in order to form a recess for holding a plastic part, and including means for ejecting the plastic part, which comprise at least some first ejector cylinders provided in the punch; and which is characterised in that the means for ejecting comprise the first ejector cylinders in such a way that they are arranged inclined on the punch and are associated with a slidable element defined by a part of the punch partially movable or by a part of the movable punch so that, when the first ejector cylinders are actuated, the inclined displacement towards the centre of the punch of the slidable parts takes place, the latter causing the vertical displacement of the movable element, in such a way that the plastic part is released.

In an embodiment of the invention, the means for ejecting comprise a thrusting element retained in a housing of the slidable part; said thrusting element being arranged inclined towards the centre of the punch by some guiding means; and the ejector cylinders being joined to the thrusting elements and arranged inclined in their same direction, in order to achieve the function described above.

The part of the punch partially movable comprises some end ejector parts which are joined by means of cross-pieces in order to facilitate the separation of the moulded parts, such that the actuation of the ejector cylinders causes the simultaneous elevation of the end ejector parts and consequently the elevation of the moulded plastic part releasing its sunken zones.

This structure has the great advantage that it does not require the use of wedges and the base plate provided for in the state of the art, and at the same time it considerably reduces the number of plates and rods, along with the corresponding machining of each of the displacement plates and rods.

Consequently, by means of the invention the moulding apparatus and the ejector system are simplified, reducing the number of movable parts for the ejection and avoiding the machining of a large number of parts, which reduces its cost considerably.

In the preferred embodiment of the invention, the end ejector parts forming part of the mould segment of the punch are joined by means of cross-pieces in order to facilitate the release of the sunken zones of the moulded part, which simplifies its ejection.

When the end ejector parts are in their low position, the cross-pieces joining them remain coupled in housings provided in the punch, such that said cross-pieces are flush with that punch.

Moreover the invention provides for the ejector cylinders and the thrusting elements to be arranged external to the punch, which simplifies its configuration.

With regard to the guiding means for the thrusting elements, it can be stated that in one embodiment of the invention they consist of an inclined rod provided in the thrusting element, which is housed in an inclined channel made in the punch, in such a way that this configuration considerably facilitates the displacement of the thrusting elements.

The invention provides for the incorporation of two thrusting elements for each of the slidable parts, arranged on both sides of the punch for which each slidable part incorporates the corresponding recesses for the thrusters, which are in turn joined to an ejector cylinder located on both sides and outside of the punch.

In another embodiment of the invention the means of ejection of the plastic part comprises some second ejector cylinders which are actuated when the first ejector cylinders reach the end of their travel and which displace moulding parts provided in the movable part of the punch, in such a way that the plastic part is separated from the movable part of the punch being kept secured only by the moulding parts thereof, which permits complete extraction to be carried out of the plastic part that is obtained.

In a preferred embodiment of the invention the second ejector cylinders are joined to displaceable plates which are integral with some rods, which are in turn joined to the moulding parts of the movable part of the punch in order to carry out the complete release in the way that was described.

The second ejector cylinders are housed inside the movable part of the punch. Referring to the displaceable plates, these are located in a recess provided between the movable punch and the punch. With respect to the rods producing the thrust of the moulding parts of the movable part of the punch, these run from the displaceable plates as far as the moulding parts via the interior of the movable part of the punch.

In order to permit the inclined displacement to be carried out towards the centre of the punch by the slidable parts, the first cylinders are arranged inclined towards the centre of the punch and joined to its fixed part and to the slidable parts.

Provision is made for the slidable parts of the mould to be joined to the movable part of the punch by means of sliding guides in order to permit the simultaneous displacement of both to be effected when the first ejector cylinders are actuated.

Likewise, the slidable parts of the mould are joined to the fixed part of the punch by means of sliding guides in order to permit their inclined displacement in the way that was described.

The slidable plates are also retained in the recess by means of sliding guides in order to permit their displacement when the second ejector cylinders are actuated.

The invention provides for all the guides described above to be circular in cross-section.

This configuration also has the advantage that it does not require the use of the wedges and the ejector plate, and at the same time it considerably reduces the number of parts and rods, as well as their corresponding machinings. It also reduces the length of the rods used in the first and second ejector cylinders, improving problems of sagging and reducing the weight of the equipment, at the same time as simplifying the configuration of the apparatus.

Furthermore, the invention relates to a method of releasing plastic parts by ejection which comprises folding a cavity on a punch in order to form a mould corresponding to the plastic part so as to obtain that part and which includes unfolding the cavity in order to permit the part to be extracted. The novelty of the inventive method also provides for carrying out a first phase of actuation of first ejector cylinders in order to separate some slidable parts of the mould with respect to the plastic part, and simultaneously displace a movable part of the punch so as to release the negative parts of the plastic part; furthermore comprising a second phase of actuation of the second ejector cylinders in order to separate the rest of the plastic part and thereby permit the extraction to be carried out of that plastic part.

The inventive method can be applied with the apparatus described above or any other apparatus functioning according to the stated phases.

Below, in order to facilitate a better understanding of this descriptive specification and forming an integral part thereof, a series of figures is attached in which the object of the invention has been represented by way of illustration and non-limiting.

### BRIEF DESCRIPTION OF THE FIGURES

**Figure 1****.**- Shows a perspective view of an apparatus for release by forward ejection of the invention, in which the end ejector parts are located in their lower position flush with the punch prior to effecting the ejection.
**Figure 2****.-** Shows an elevation view of the previous figure.
**Figure 3****.-** Shows a perspective view equivalent to figure 1, but in this case the end ejector parts are in their raised position in which the ejection of the moulded plastic part has been effected.
**Figure 4****.-** Shows an elevation view of the previous figure.
**Figure 5****.-** Shows a diagrammatic front view in cross-section of another possible example of embodiment of the apparatus of the invention in which the plastic part is arranged in the mould prior to commencing its ejection.
**Figure 6****.-** Shows a view equivalent to the previous figure in which the ejection process of the moulded plastic part that has been obtained has commenced, by means of the actuation of the first ejector cylinders.
**Figure 7****.-** Shows a view equivalent to the previous figure in which the actuation can be seen of the second ejector cylinders permitting the extraction of the moulded plastic part that has been obtained.

### DESCRIPTION OF THE REFERRED FORM OF EMBODIMENT

Given below is a description of the invention base on the figures commented on above, in which a moulding apparatus for vehicle bumpers is represented as an example of embodiment, though it could also of course be applied in the manufacturer of other types of plastic parts.

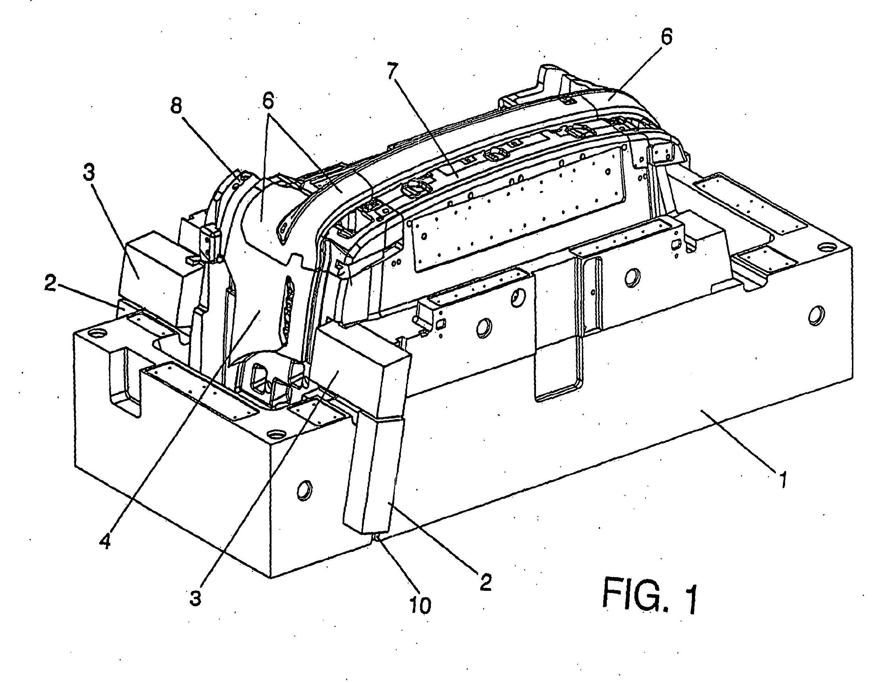

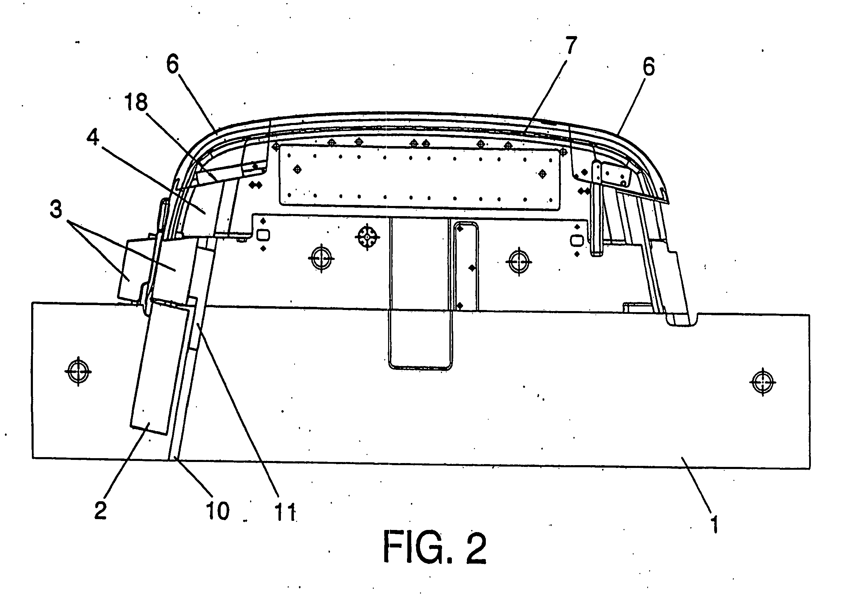

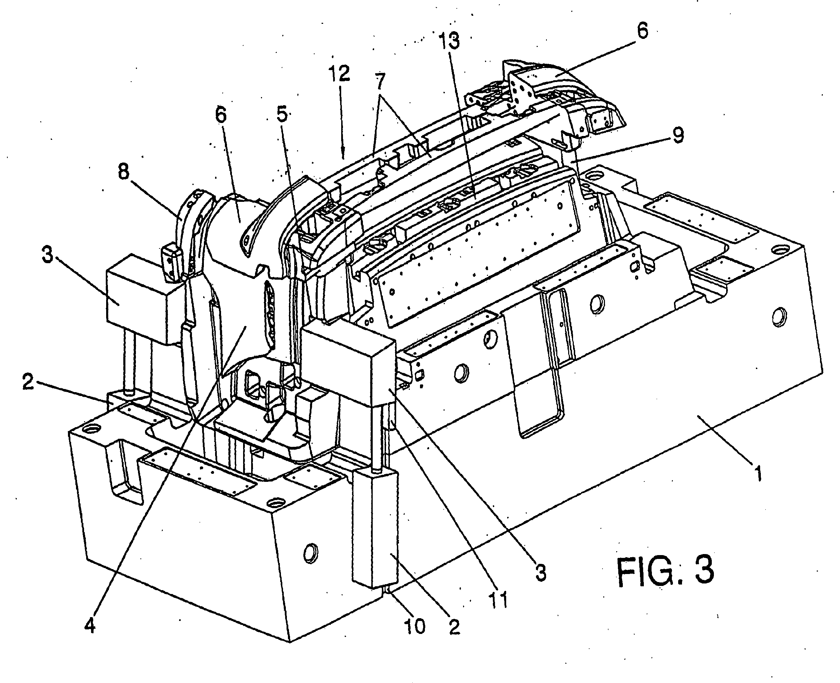

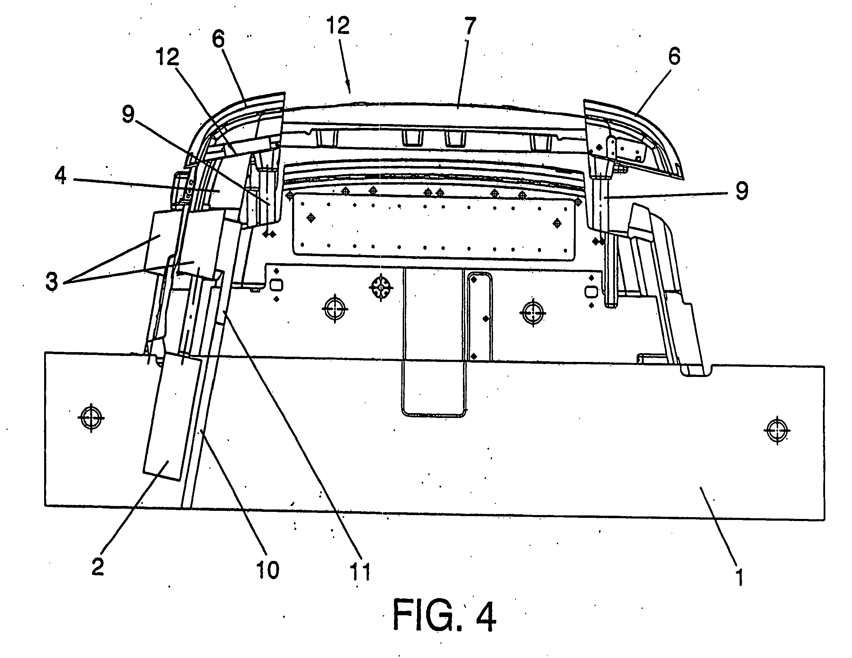

The invention comprises a punch 1 on which a cavity 14 is folded in order to obtain a moulded plastic part 22. In figures 1 to 4, neither the cavity 14 nor the moulded plastic part 22 have been represented since they are not the object of the invention and also so as to facilitate a better understanding of the functioning of the invention.

The punch 1 comprises four ejector hydraulic cylinders 2, of which just two have been represented, which are provided on the exterior and the larger surface sides of the punch 1. The other two ejector hydraulic cylinders 2 are arranged symmetrically with respect to the transverse axis of the moulding machine. Each one of the ejector hydraulic cylinders 2 is joined to a thrusting element 3 which is retained in a housing 5 of a slidable part 4 on which an end ejector part 6 has been provided which forms part of a mould segment 12 of the punch 1, in other words, the set of the end ejector parts 6 and some cross-pieces 7 constitute a part of the punch partially movable. At this point it can be clarified that the cavity 14 incorporates a shape complementary to the mould segment 12 of the punch 1, as is known in the state of the art.

Therefore, the mould segment 12 furthermore comprises the cross-pieces 7 which join the two end ejector parts 6 and which are coupled in some housings 13 provided in the punch 1, such that they remain flush with it.

The parts 6 are associated with the slidable part 4 by means of some displacement guides 18 in order to permit the relative displacement between them.

Moreover, the end ejector parts 6 are integral with some rods 9 which are housed in some guides provided in the punch 1, in order to permit the raising/descent of both end ejector parts 6 simultaneously as will be explained below.

The ejector hydraulic cylinders 2 are arranged inclined towards the centre of the punch 1 and the thrusting elements 3 are likewise inclined in the same direction as the ejector hydraulic cylinders 2, for which said thrusting elements 3 are fitted with an inclined rod 11 housed in an inclined channel 10 made in the punch 1 with which, when activating the ejector hydraulic cylinders 2, the displacement takes place of the thrusting elements 3 in the direction established by the inclined channel 10. In this displacement, the thrusting elements 3 displace the slidable part 4 which in turn pushes on the end ejector parts 6, being displaced one on top of the other by means of the guides 18, and in the specific example of embodiment some conventional parts 8 are also displaced which form part of the mould segment 12 of the punch 1 for the manufacture of bumpers. The displacement of the end ejector parts 6 is guided by means of the rods 9, in such a way that the cross-pieces 7 project from the housings 13 causing the elevation of the moulded plastic part which is located above the end ejector parts 6 and above said cross-pieces 7, with which the elevation is produced of the moulded part releasing the sunken zones of the mould, remaining in the forward ejection position.

Once the moulded part has been ejected, the ejector hydraulic cylinders 2 are again actuated in order to cause the descent of the parts commented on above, with the cross-pieces 7 again becoming housed in the housings 13 remaining ready for carrying out a new moulding operation.

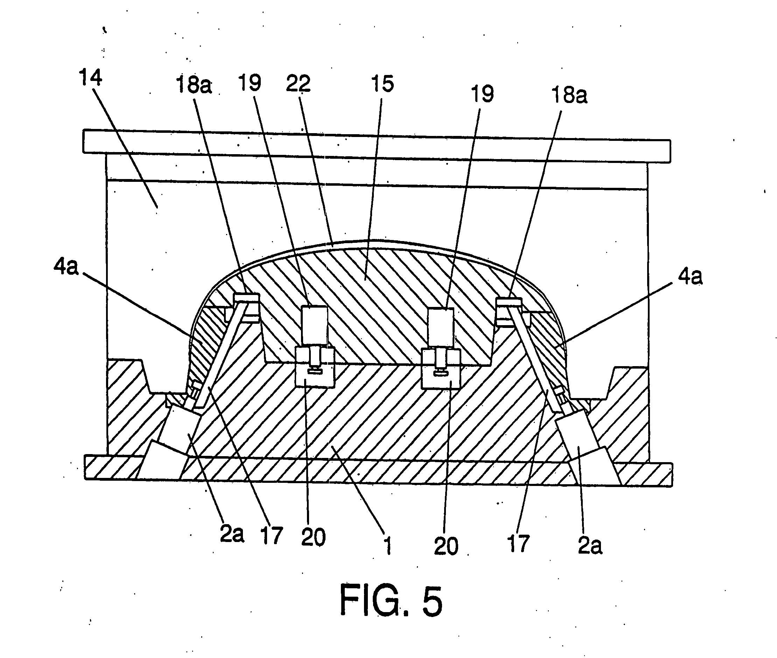

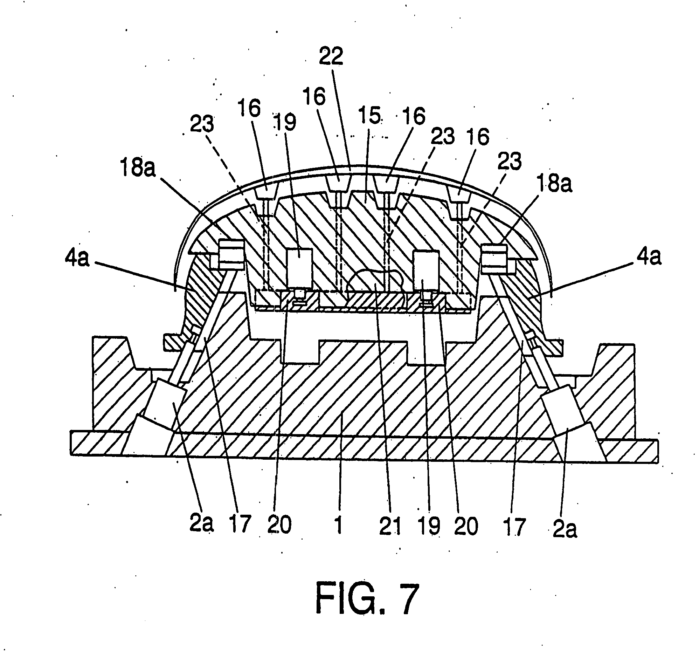

Figures 5 to 7 represent another example of embodiment of the invention in which the punch 1 is provided with some slidable parts 4a, a movable part (15) of the punch and some moulding parts 16 provided in the movable part (15) of the punch.

The slidable parts 4a are joined to the first ejector hydraulic cylinders 2a which are fixed in an inclined fashion in the punch 1; and in such a way that the slidable parts 4a are fixed to the punch 1 by means of sliding guides 17 in order to permit their displacement.

The slidable parts 4a are also joined to the movable part (15) of the punch by means of some displacement guides 18a for permitting the relative displacement between both.

Inside the movable part (15) of the punch provision has been made for a second ejector cylinder 19 whose rod is joined to some displaceable plates 20 arranged in a recess 21 located between the movable part (15) of the punch and the fix part (1) of the punch. The displaceable plates 20 are integral with some rods 23 running along the inside of the movable part (15) of the punch, and whose end is joined to the moulding parts 16.

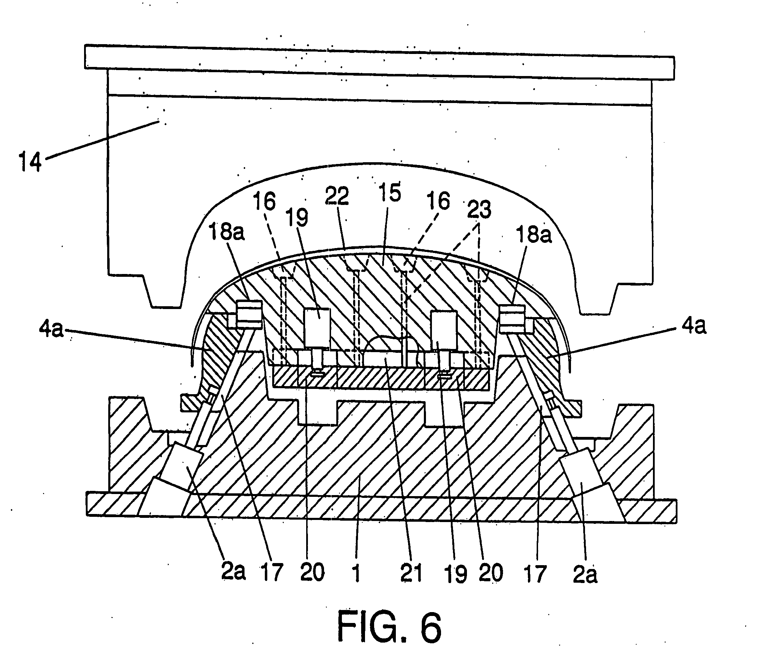

The process of release from the mould comprises a first phase in which the first ejector hydraulic cylinders 2a are actuated in order to produce the inclined displacement of the slidable parts 4a towards the interior of the punch 1, as shown in figure 6, in such a way that the slidable parts 4a become separated with respect to the ends of the plastic part 22, which in the example consists of a vehicle bumper.

Simultaneously with the displacement of the slidable parts 4a, the perpendicular displacement is produced of the movable part (15) of the punch due to the arrangement of the displacement guides 18a, in such a way that the negative parts of the plastic part 22 are released.

Once the end of travel of the first ejector cylinders 2a has occurred, the second ejector cylinders 19 are actuated, which provoke the withdrawal of their rods, which produces the vertical movement of the displaceable plates 20 on the recess 21 by means of some guides (not represented), in such a way that the rods 23 are displaced towards the outside of the movable part (15) of the punch with which the moulding parts 16 exit to the outside provoking the ejection of the plastic part 22 permitting its extraction with complete ease.

## Claims

1. **APPARATUS FOR RELEASING PLASTIC PARTS FROM A MOULD BY FORWARD EJECTION,** comprising a punch onto which a cavity (14) is folded in order to form a recess for holding a moulded plastic part (22), and including means for ejecting the moulded plastic part (22) comprising:
- some first ejector cylinders which are provided in the fix part (1) of the punch and act in the movement of a movable part (15) of the punch; and
- some second ejector cylinders integral to the movable part (15) of the punch which displace some moulding parts (16) in such a way that they produce the ejection of the moulded plastic part (22);
**characterised in that**
the first ejector cylinders (2, 2a), of the means for ejecting are arranged inclined on the fix part (1) of the punch and are associated with a slidable part (4, 4a) which is associated with a movable element selected among a part of the punch partially movable (6, 7) and the movable part (15) of the punch, in order, when the first ejector cylinders (2, 2a) are actuated, to provoke the inclined displacement towards the centre of the punch of the slidable parts (4, 4a) and the vertical displacement of the movable element (6, 7, 15), thereby releasing the plastic part (22); and
the second ejector cylinders (19) are joined to displaceable plates (20), which are integral with some rods (23), which are joined to the moulding parts (16) of the movable part (15) of the punch.

2. **APPARATUS FOR RELEASING PLASTIC PARTS FROM A MOULD BY FORWARD EJECTION,** according to claim 1, **characterised in that** the means for ejecting comprise at least one thrusting element (3) retained in a housing (5) of each slidable part (4), the thrusting element (3) being arranged inclined towards the centre of the fix part (1) of the punch by means of guiding means.

3. **APPARATUS FOR RELEASING PLASTIC PARTS FROM A MOULD BY FORWARD EJECTION,** according to claim 1, **characterised in that** the movable element, consisting of a part of the punch partially movable (6, 7), comprises some end ejector parts (6) which are joined by means of cross-pieces (7) in order to facilitate the separation of the moulded plastic part (22).

4. **APPARATUS FOR RELEASING PLASTIC PARTS FROM A MOULD BY FORWARD EJECTION,** according to claim 3, **characterised in that** the cross-pieces (7) are coupled in housings (13) provided in the fix part (1) of the punch being flush with the same.

5. **APPARATUS FOR RELEASING PLASTIC PARTS FROM A MOULD BY FORWARD EJECTION**, according to claim 1, **characterised in that** the ejector cylinders (2) and the thrusting elements (3) are arranged external to the fix part (1) of the punch.

6. **APPARATUS FOR RELEASING PLASTIC PARTS FROM A MOULD BY FORWARD EJECTION,** according to claim 1, **characterised in that** the guiding means of the thrusting elements (3) comprise an inclined rod (11) provided in the thrusting element (3), which is housed in an inclined channel (10) made in the fix part (1) of the punch.

7. **APPARATUS FOR RELEASING PLASTIC PARTS FROM A MOULD BY FORWARD EJECTION,** according to claim 1, **characterised in that** it comprises two ejector cylinders (2) and two thrusting elements (3) for each of the slidable parts (4), the latter having two housings (5) for the corresponding thrusting elements (3).

8. **APPARATUS FOR RELEASING PLASTIC PARTS FROM A MOULD BY FORWARD EJECTION,** according to clam 1, **characterised in that** the second ejector cylinders (19) are arranged inside the movable part (15) of the punch; the displaceable plates (20) are provided in a recess (21) located between the displaceable punch (15) and the fix part (1) of the punch; and the rods (22) joining the displaceable plates (20) with the moulding parts (16) run via the interior of the displaceable punch (15).

9. **APPARATUS FOR RELEASING PLASTIC PARTS FROM A MOULD BY FORWARD EJECTION,** according to claim 1, **characterised in that** the first ejector cylinders (2a) are joined to the fix part (1) of the punch and to the slidable part (4).

10. **APPARATUS FOR RELEASING PLASTIC PARTS FROM A MOULD BY FORWARD EJECTION,** according to claims 1 or 8, **characterised in that** the slidable parts (4, 4a) of the fix part (1) of the punch are joined to the movable element (6, 15) by means of sliding guides (18, 18a) in order to provoke its displacement by thrusting which the slidable parts (4, 4a) carry out on the fix part (1) of the punch when the first ejector cylinders (2, 2a) are actuated.

11. **APPARATUS FOR RELEASING PLASTIC PARTS FROM A MOULD BY FORWARD EJECTION,** according to claim 1, **characterised in that** the slidable parts (4) are joined to the fix part (1) of the punch by means of sliding guides (17).

12. **APPARATUS FOR RELEASING PLASTIC PARTS FROM A MOULD BY FORWARD EJECTION,** according to claim 8, **characterised in that** the slidable plates (20) are retained in the recess (21) by means of sliding guides.

13. **METHOD FOR RELEASING PLASTIC PARTS FROM A MOULD BY FORWARD EJECTION,** applied to the apparatus for releasing from a mould of claim 1, comprising to fold a cavity (14) on a punch in order to form a recess corresponding to the moulded plastic part (22), and to unfold the cavity (14) in order to commence the release from the mould; **characterised in that** it comprises a first phase of actuation of the first ejector cylinders (2a) in order to separate some slidable parts (4a) with respect to the plastic part (22) and simultaneously to displace a movable part (15) of the punch so as to release the negative parts of the moulded plastic part (22); including a second phase of simultaneous actuation of second ejector cylinders (19) in order to separate the rest of the moulded plastic part (22) from the rest of the punch.

## Patentansprüche

1. Vorrichtung zum Auswerfen von Kunststoffteilen aus einer Form durch Vorwärtsausstoß, wobei die Vorrichtung eine Presse aufweist, auf der ein Formnest (14) aufgefaltet ist, um eine Ausnehmung zum Halten eines geformten Kunststoffteils (22) auszubilden, und mit einer Einrichtung zum Ausstoßen des geformten Kunststoffteils (22) mit:
ersten Ausstoßzylindern, die im feststehenden Teil (1) der Presse vorgesehen sind und bei der Bewegung eines beweglichen Teils (15) der Presse arbeiten; und
zweiten Ausstoßzylindern, die mit dem beweglichen Teil (15) der Presse einteilig sind und Formteile (16) derart verschieben, dass sie den Ausstoß des geformten Kunststoffteils (22) verursachen;
**dadurch gekennzeichnet, dass**
die ersten Ausstoßzylinder (2, 2a) der Einrichtung zum Ausstoßen schräg auf dem feststehenden Teil (1) der Presse angeordnet und einem gleitenden Teil (4, 4a) zugeordnet sind, das einem beweglichen Element zugeordnet ist, das zwischen einem Teil (6, 7) der Presse, der teilweise beweglich ist, und dem beweglichen Teil (15) der Presse ausgewählt wird, um, wenn die ersten Ausstoßzylinder betätigt werden, das schräge Verschieben der gleitenden Teile (4, 4a) zur Mitte der Presse und das vertikale Verschieben der beweglichen Elemente (6, 7, 15) zu veranlassen, wodurch das Kunststoffteil (22) ausgeworfen wird; und
die zweiten Ausstoßzylinder (19) mit verschiebbaren Platten (20) verbunden sind, die einteilig mit Stangen (23) sind, die mit den Formteilen (16) des beweglichen Teils (15) der Presse verbunden sind.

2. Vorrichtung zum Auswerfen von Kunststoffteilen aus einer Form durch Vorwärtsausstoß nach Anspruch 1, **dadurch gekennzeichnet, dass** die Einrichtung zum Ausstoßen wenigstens ein Schubelement (3) aufweist, das in einem Gehäuse (5) jedes gleitenden Teils (4) gehalten ist, wobei das Schubelement (3) durch Führungsmittel schräg zur Mitte des feststehenden Teils (1) der Presse hin angeordnet ist.

3. Vorrichtung zum Auswerfen von Kunststoffteilen aus einer Form durch Vorwärtsausstoß nach Anspruch 1, **dadurch gekennzeichnet, dass** das bewegliche Element, das aus einem teilweise beweglichen Teil (6, 7) der Presse, besteht, Ausstoßendteile (6) aufweist, die mittels Kreuzstücken (7) verbunden sind, um die Abtrennung des geformten Kunststoffteils (22) zu erleichtern.

4. Vorrichtung zum Auswerfen von Kunststoffteilen aus einer Form durch Vorwärtsausstoß nach Anspruch 3, **dadurch gekennzeichnet, dass** die Kreuzstücke (7) in Gehäusen (13) gekoppelt sind, die in dem feststehenden Teil (1) der Presse bündig damit vorgesehen sind.

5. Vorrichtung zum Auswerfen von Kunststoffteilen aus einer Form durch Vorwärtsausstoß nach Anspruch 1, **dadurch gekennzeichnet, dass** die Ausstoßzylinder (2) und die Schubelemente (3) außerhalb des feststehenden Teils (1) der Presse angeordnet sind.

6. Vorrichtung zum Auswerfen von Kunststoffteilen aus einer Form durch Vorwärtsausstoß nach Anspruch 1, **dadurch gekennzeichnet, dass** die Führungsmittel der Schubelemente (3) eine schräge Stange (11) aufweisen, die in dem Schubelement (3) vorgesehen ist, und die sich in einem im feststehenden Teil (1) der Presse gebildeten schrägen Kanal (10) befindet.

7. Vorrichtung zum Auswerfen von Kunststoffteilen aus einer Form durch Vorwärtsausstoß nach Anspruch 1, **dadurch gekennzeichnet, dass** sie zwei Ausstoßzylinder (2) und zwei Schubelemente (3) für jedes der gleitenden Teile (4) aufweist, wobei letztere zwei Gehäuse (5) für die entsprechenden Schubelemente (3) aufweisen.

8. Vorrichtung zum Auswerfen von Kunststoffteilen aus einer Form durch Vorwärtsausstoß nach Anspruch 1, **dadurch gekennzeichnet, dass** die zweiten Ausstoßzylinder (19) im beweglichen Teil (15) der Presse angeordnet sind, die verschiebbaren Platten (20) in einer Ausnehmung (21) vorgesehen sind, die sich zwischen der verschiebbaren Presse (15) und dem feststehenden Teil (1) der Presse befindet, und die Stangen (22), die die verschiebbaren Platten (20) mit den Formteilen (16) verbinden, durch den Innenraum der verschiebbaren Presse (15) verlaufen.

9. Vorrichtung zum Auswerfen von Kunststoffteilen aus einer Form durch Vorwärtsausstoß nach Anspruch 1, **dadurch gekennzeichnet, dass** die ersten Ausstoßzylinder (2a) mit dem feststehenden Teil (1) der Presse und mit dem gleitenden Teil (4) verbunden sind.

10. Vorrichtung zum Auswerfen von Kunststoffteilen aus einer Form durch Vorwärtsausstoß nach den Ansprüchen 1 oder 8, **dadurch gekennzeichnet, dass** die gleitenden Teile (4, 4a) des feststehenden Teils (1) der Presse mittels Gleitführungen (18, 18a) mit dem beweglichen Element (6, 15) verbunden sind, um eine Verschiebung durch Schub zu bewirken, den die gleitenden Teile (4, 4a) auf den festen Teil (1) der Presse ausüben, wenn die ersten Ausstoßzylinder (2, 2a) betätigt werden.

11. Vorrichtung zum Auswerfen von Kunststoffteilen aus einer Form durch Vorwärtsausstoß nach Anspruch 1, **dadurch gekennzeichnet, dass** die gleitenden Teile (4) mittels Gleitführungen (17) mit dem feststehenden Teil (1) der Presse verbunden sind.

12. Vorrichtung zum Auswerfen von Kunststoffteilen aus einer Form durch Vorwärtsausstoß nach Anspruch 8, **dadurch gekennzeichnet, dass** die gleitenden Platten (20) mittels Gleitführungen in der Ausnehmung (21) gehalten sind.

13. Verfahren zum Auswerfen von Kunststoffteilen aus einer Form durch Vorwärtsausstoß, das auf die Vorrichtung zum Auswerfen aus einer Form nach Anspruch 1 angewendet wird, und das Auffalten eines Formnests (14) auf einer Presse zum Ausbilden einer Ausnehmung, die dem geformten Kunststoffteil (22) entspricht, und das Entfalten des Formnests (14) zum Starten des Auswerfens aus der Form umfasst; **dadurch gekennzeichnet, dass** es eine erste Betätigungsphase der ersten Ausstoßzylinder (2a), um gleitende Teile (4a) in Bezug auf das Kunststoffteil (22) zu trennen und gleichzeitig einen beweglichen Teil (15) der Presse zu verschieben, um die negativen Teile des geformten Kunststoffteils (22) auszuwerfen; und eine zweite Phase gleichzeitiger Betätigung von zweiten Ausstoßzylindern (19) umfasst, um den Rest des geformten Kunststoffteils (22) von dem Rest der Presse zu trennen.

## Revendications

1. Appareil de démoulage de pièces plastiques hors d'un moule par éjection vers l'avant, comprenant un poinçon sur lequel une cavité (14) est pliée de manière à former un évidement pour contenir une pièce en plastique moulé (22), et comprenant des moyens pour éjecter la pièce en plastique moulé (22), comprenant:
- plusieurs premiers cylindres d'éjecteur qui sont prévus dans la partie fixe (1) du poinçon et qui agissent dans le déplacement d'une partie mobile (15) du poinçon; et
- plusieurs seconds cylindres d'éjecteur intégrés à la partie mobile (15) du poinçon qui déplacent certaines parties de moulage (16) de telle sorte qu'elles entraînent l'éjection de la pièce en plastique moulé (22);
**caractérisé en ce que**:
les premiers cylindres d'éjecteur (2, 2a) des moyens d'éjection sont agencés inclinés sur la partie fixe (1) du poinçon et sont associés à une partie coulissante (4, 4a) qui est associée à un élément mobile qui est sélectionné entre une partie du poinçon partiellement mobile (6, 7) et la partie mobile (15) du poinçon, dans le but, lorsque les premiers cylindres d'éjecteur (2, 2a) sont actionnés, de provoquer le déplacement incliné en direction du centre du poinçon des parties coulissantes (4, 4a) ainsi que le déplacement vertical de l'élément mobile (6, 7, 15), démoulant ainsi la pièce en plastique (22); et
les seconds cylindres d'éjecteur (19) sont joints à des plaques déplaçables (20), qui sont intégrées à certaines tiges (23), qui sont jointes aux parties de moulage (16) de la partie mobile (15) du poinçon.

2. Appareil de démoulage de pièces plastiques hors d'un moule par éjection vers l'avant selon la revendication 1, **caractérisé en ce que** les moyens d'éjection comprennent au moins un élément de poussée (3) qui est retenu dans un logement (5) de chaque partie coulissante (4), l'élément de poussée (3) étant agencé incliné en direction du centre de la partie fixe (1) du poinçon à l'aide de moyens de guidage.

3. Appareil de démoulage de pièces plastiques hors d'un moule par éjection vers l'avant selon la revendication 1, **caractérisé en ce que** l'élément mobile, qui est constitué d'une partie du poinçon partiellement mobile (6, 7), comprend certaines parties d'éjecteur d'extrémité (6) qui sont jointes au moyen de pièces transversales (7) dans le but de faciliter la séparation de la pièce en plastique moulé (22).

4. Appareil de démoulage de pièces plastiques hors d'un moule par éjection vers l'avant selon la revendication 3, **caractérisé en ce que** les pièces transversales (7) sont couplées dans des logements (13) qui sont prévus dans la partie fixe (1) du poinçon qui est à fleur de celle-ci.

5. Appareil de démoulage de pièces plastiques hors d'un moule par éjection vers l'avant selon la revendication 1, **caractérisé en ce que** les cylindres d'éjecteur (2) et les éléments de poussée (3) sont agencés à l'extérieur de la partie fixe (1) du poinçon.

6. Appareil de démoulage de pièces plastiques hors d'un moule par éjection vers l'avant selon la revendication 1, **caractérisé en ce que** les moyens de guidage des éléments de poussée (3) comprennent une tige inclinée (11) qui est prévue dans l'élément de poussée (3), qui est logée dans un canal incliné (10) formé dans la partie fixe (1) du poinçon.

7. Appareil de démoulage de pièces plastiques hors d'un moule par éjection vers l'avant selon la revendication 1, **caractérisé en ce qu'**il comprend deux cylindres d'éjecteur (2) et deux éléments de poussée (3) pour chacune des parties coulissantes (4), ces dernières comprenant deux logements (5) pour les éléments de poussée correspondants (3).

8. Appareil de démoulage de pièces plastiques hors d'un moule par éjection vers l'avant selon la revendication 1, **caractérisé en ce que** les seconds cylindres d'éjecteur (19) sont agencés à l'intérieur de la partie mobile (15) du poinçon; les plaques déplaçables (20) sont prévues dans un évidement (21) qui est situé entre le poinçon déplaçable (15) et la partie fixe (1) du poinçon; et les tiges (22) qui joignent les plaques déplaçables (20) aux parties de moulage (16) passent par l'intérieur du poinçon déplaçable (15).

9. Appareil de démoulage de pièces plastiques hors d'un moule par éjection vers l'avant selon la revendication 1, **caractérisé en ce que** les premiers cylindres d'éjecteur (2a) sont joints à la partie fixe (1) du poinçon et à la partie coulissante (4).

10. Appareil de démoulage de pièces plastiques hors d'un moule par éjection vers l'avant selon les revendications 1 à 8, **caractérisé en ce que** les parties coulissantes (4, 4a) de la partie fixe (1) du poinçon sont jointes à l'élément mobile (6, 15) au moyen de guides coulissants (18, 18a) dans le but de provoquer son déplacement par une poussée réalisée par les parties coulissantes (4, 4a) sur la partie fixe (1) du poinçon lorsque les premiers cylindres d'éjecteur (2, 2a) sont actionnés.

11. Appareil de démoulage de pièces plastiques hors d'un moule par éjection vers l'avant selon la revendication 1, **caractérisé en ce que** les parties coulissantes (4) sont jointes à la partie fixe (1) du poinçon au moyen de guides coulissants (17).

12. Appareil de démoulage de pièces plastiques hors d'un moule par éjection vers l'avant selon la revendication 8, **caractérisé en ce que** les plaques coulissantes (20) sont retenues dans l'évidement (21) au moyen de guides coulissants.

13. Procédé de démoulage de pièces plastiques hors d'un moule par éjection vers l'avant, appliqué à l'appareil de démoulage hors d'un moule selon la revendication 1, comprenant le pliage d'une cavité (14) sur un poinçon dans le but de former un évidement qui correspond à la pièce en plastique moulé (22), et le dépliage de la cavité (14) dans le but de commencer le démoulage hors du moule; **caractérisé en ce qu'**il comprend une première phase d'actionnement des premiers cylindres d_{'}éjecteur (2a) dans le but de séparer certaines parties coulissantes (4a) par rapport à la pièce en plastique (22) et de déplacer simultanément une partie mobile (15) du poinçon de manière à démouler les parties négatives de la pièce en plastique moulé (22); comprenant une seconde phase d'actionnement simultané des seconds cylindres d'éjecteurs (19) dans le but de séparer le reste de la pièce en plastique moulé (22) du reste du poinçon.
